# EUROPEAN PATENT APPLICATION

(11) **EP 4 646 009 A1**
(43) Date of publication of application: **05.11.2025**
(21) Application number: 25173555.1
(22) Date of filing: 30.04.2025
(51) Int. Cl.: H04W 74/0833, H04L 5/00, H04W 74/00

(54) **METHOD AND APPARATUS FOR DETERMINING A RACH RESOURCE TYPE IN SUBBAND FULL-DUPLEX COMMUNICATION**

(30) Priority: 03.05.2024 KR 20240059129; 22.04.2025 KR 20250052021
(71) Applicant: KT Corporation, Seongnam-si, Gyeonggi-do 13606 (KR)
(72) Inventor: LEE, Eun-Jong, 13606 Seongnam-si, Gyeonggi-do (KR); PARK, Kyujin, 13606 Seongnam-si, Gyeonggi-do (KR)
(74) Representative: BCKIP Part mbB

(57) **Abstract**

Provided are a method and apparatus for determining a random access channel (RACH) resource type in subband full duplex (SBFD) of a wireless communication system. The method of the terminal may include receiving information on a maximum number of preamble transmissions through a subband full duplex (SBFD) symbol, transmitting at least one first preamble through a first random access channel (RACH) resource, and determining a second RACH resource configured on a non-SBFD symbol when a number of transmissions of the at least one first preamble exceeds the maximum number of preamble transmissions through the SBFD symbol.

## Description

### CROSS-REFERENCE TO RELATED THE APPLICATION

This application is based on and claims priority on Patent Application No. 10-2024-0059129 filed on May 3, 2024 and No. 10-2025-0052021 filed on Apr. 22, 2025 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a corresponding rise in communication traffic that must be managed. To handle this increased communication traffic, a next generation 5G system, which is an enhanced mobile broadband communication system compared to the exiting LTE system, has become essential. Such a next generation 5G system has been designed based on scenarios which are classified into Enhanced Mobile BroadBand (eMBB), Ultra-reliable and low-latency communication (URLLC), Massive Machine-Type Communications (mMTC), and more.

eMBB, URLLC, and mMTC represent next generation mobile communication scenarios. eMBB is characterized by high spectral efficiency, high user experience data rate, and high peak data rate. URLLC is characterized by ultra-reliability, ultra-low latency, and ultra-high availability (e.g., vehicle-to-everything (V2X), Emergency Service, and Remote Control). mMTC is characterized by low cost, low energy consumption, short packet transmission, and massive connectivity (e.g., Internet of Things (IoT)).

### SUMMARY

The disclosure is to provide a method and an apparatus for efficiently determining a RACH resource type in subband full-duplex communication.

According to an embodiment, a method of a terminal may be provided for operating in a wireless communication system. The method of the terminal may include receiving information on a maximum number of preamble transmissions through a subband full duplex (SBFD) symbol, transmit at least one first preamble through a first random access channel (RACH) resource, and determine a second RACH resource configured on a non-SBFD symbol when a number of transmissions of the at least one first preamble exceeds the maximum number of preamble transmissions through the SBFD symbol.

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving information on a maximum number of preamble transmissions through a subband full duplex (SBFD) symbol, transmit at least one first preamble through a first random access channel (RACH) resource, and determine a second RACH resource configured on a non-SBFD symbol when a number of transmissions of the at least one first preamble exceeds the maximum number of preamble transmissions through the SBFD symbol.

The terminal may transmit a second preamble through the determined second RACH resource.

The first RACH resource may be configured on the SBFD symbol. Further, the first RACH resource may correspond to a resource type selected during a RACH initialization phase.

In addition, when a resource type is switched from the first RACH resource to the second RACH resource and the second preamble is transmitted, no further resource type switching may be considered.

The first RACH resource may correspond to resource types configured on the SBFD symbol and the non-SBFD symbol.

The first RACH resource may correspond to a first RACH occasion belonging to the SBFD symbol, and the second RACH resource may correspond to a second RACH occasion belonging to the non-SBFD symbol.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A and 7B show schematic examples of subband full duplex communication.
FIGS. 8A and 8B show examples where an uplink (UL) subband is configured in a downlink (DL) slot according to an embodiment.
FIG. 9 is a flowchart showing a method of operating a terminal according to an embodiment.
FIG. 10 illustrates a procedure between a terminal and a base station according to an embodiment of the disclosure.
FIG. 11 illustrates a procedure between a terminal and a base station according to another embodiment of the disclosure.
FIG. 12 illustrates a procedure between a terminal and a base station according to yet another embodiment of the disclosure.
FIG. 13 is a flowchart showing a method of operating a terminal according to another embodiment.
FIG. 14 is a block diagram showing apparatuses according to an embodiment of the disclosure.
FIG. 15 is a block diagram showing a terminal according to an embodiment of the disclosure.
FIG. 16 is a block diagram of a processor in accordance with an embodiment.
FIG. 17 is a detailed block diagram of a transceiver of a first apparatus shown in FIG. 14 or a transceiving unit of an apparatus shown in FIG. 15.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

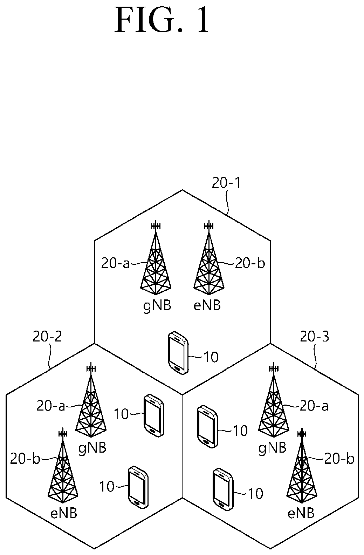

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

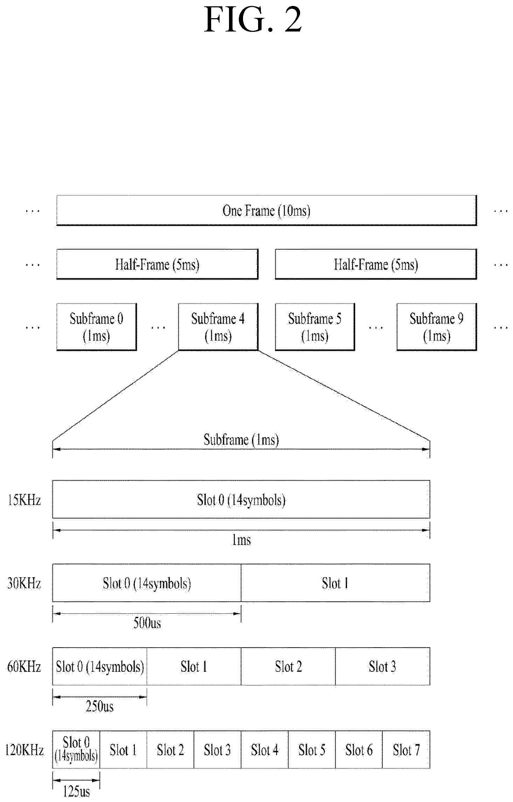

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

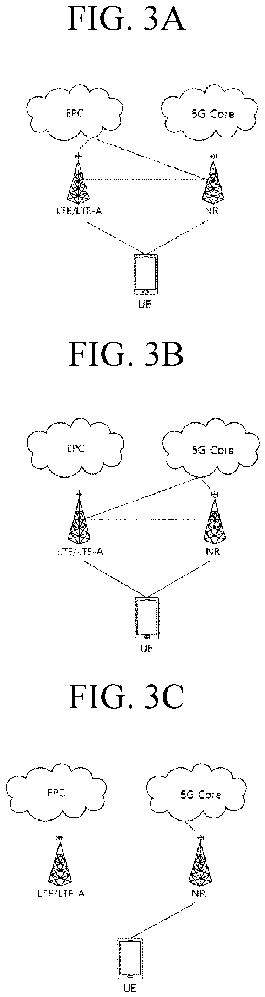

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

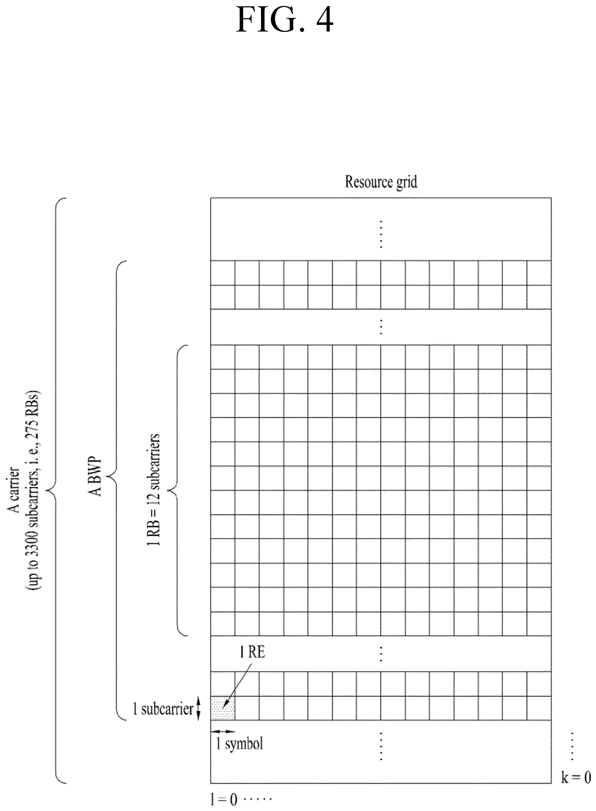

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

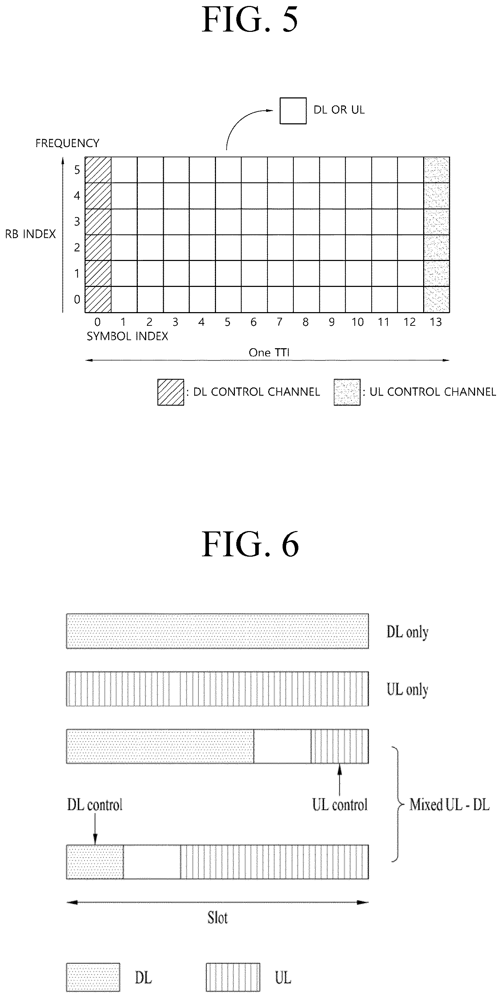

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

Time division duplex (TDD) refers to a duplexing method widely used in commercial NR, i.e., a 5G mobile communication system. In TDD, time-duration radio resources are divided into downlink slots and uplink slots, where the downlink slots are typically distributed in a higher percentage than the uplink slots based on the distribution ratio of uplink traffic and downlink traffic. However, such limitation in the uplink slot distribution has negative effects in terms of coverage and delay time. Recently, full duplex communication has attracted attention as a technology to solve this problem.

The full duplex communication refers to technology in which the gNB, i.e., the base station performs DL transmission and UL reception simultaneously through the same (or given) radio resources. The UE may also perform DL reception and UL transmission simultaneously. In other words, both the base station and the UE may support full duplex communication. However, unlike the base station in which self-interference cancelation is structurally more feasible, the UE exhibits DL reception performance that is susceptible to self-interference from a UL transmission signal. Therefore, it is generally considered preferable to operate the gNB in full duplex communication and operate the UE in half duplex communication. In addition, the gNB may also primarily consider a subband non-overlapping full duplex communication method in which it performs DL transmission and UL reception simultaneously, but uses different frequency resources for transmission and reception, rather than the same resources between the DL and UL to reduce the effects of self-interference.

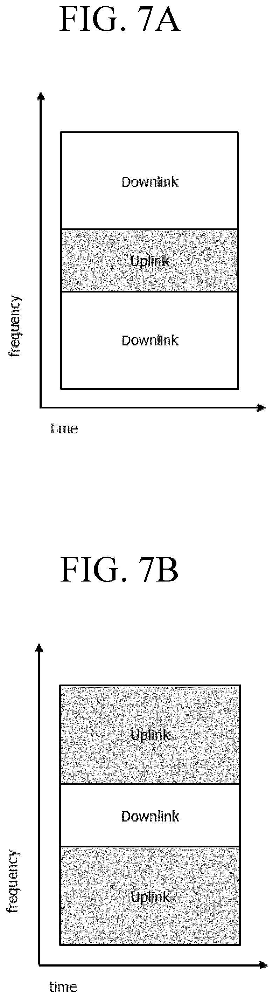

**FIGS. 7A and 7B** **show schematic illustrations of subband full duplex communication.**

The subband full duplex communication may be referred to as subband full duplex communication (SBFD) or full duplex communication subband (FDSB).

In SBFD, some time-frequency resources on a given carrier are used for the downlink, and some time-frequency resources on the same carrier are used for the uplink. Specifically, the downlink resources and the uplink resources are frequency-division multiplexed, which are separated from each other in the frequency domain and used for transmission and reception.

FIGS. 7A and 7B show examples of SBFD. In the frequency domain, FIG. 7A shows an example where an uplink subband is located between downlink subbands, and FIG. 7B shows an example where a downlink subband is located between the uplink subbands. Although not shown in the drawings, a guard band or guard period may be located between the downlink subband and the uplink subband to reduce interference.

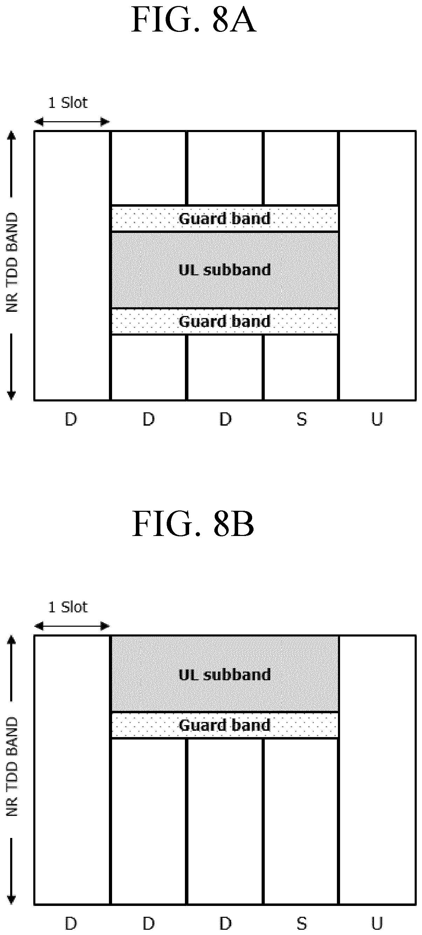

**FIGS. 8A and 8B** **show examples where an uplink (UL) subband is configured in a downlink (DL) slot according to an embodiment of the present specification.**

Referring to FIGS. 8A and 8B, if a TDD configuration has DL-to-UL ratio of 4:1 in any NR frequency band (where, the last DL slot is a special slot including flexible symbols for DL/UL switching), the UL subband may be configured to support the UL transmission of the UE in some (or all) DL slots among the corresponding DL slots. When the UL subband is configured in any DL slot, the UL subband may be configured either at the center or at the edge of the corresponding frequency band as shown in FIGS. 8A and 8B, and a guard band may be configured between the UL subband and the DL subband in the corresponding slot.

Meanwhile, the remaining frequency resources, excluding the UL subband and the guard band, may be used as the DL subbands for the downlink (DL) transmission and reception according to the existing slot/symbol configuration information. As shown in FIG. 8A, when the UL subband is configured at the center of the frequency band, a total of two guard bands, one at the top and one at the bottom, are configured around the corresponding UL subband, and two LD subbands - one above and one below - are configured outside the guard bands. Alternatively, as shown in FIG. 8B, when the UL subband is configured at the edge of the frequency band, one guard band and one DL subband may be configured adjacent to the corresponding UL subband.

In the existing NR, the UL-DL slots are defined to be configured in units of cells through RRC signaling specific to each cell. In other words, the patterns of DL symbol, UL symbol, and flexible symbol having certain periods are configured through an RRC message/information element called 'tdd-UL-DL-ConfigurationCommon', for the UL-DL slot configuration. In addition, only the flexible symbol configured through the 'tdd-UL-DL-ConfigurationCommon' may be reconfigured as a UL symbol, DL symbol or flexible symbol via UE-specific RRC signaling, i.e., 'tdd-UL-DL-ConfigurationDedicated'. Alternatively, a method of indicating a dynamic slot format through a PDCCH common to a UE group has also been defined. To this end, NR also supports a method of indicating a dynamic slot format through DCI format 2_0.

According to the existing slot configuration method described above, any one symbol may be configured or indicated as the DL, UL or flexible symbol. For example, as shown in FIG. 8A, any slot format may be configured as "DDDSU" through the existing slot configuration. D refers to a downlink slot and indicates that all OFDM symbols in the corresponding slot are configured for downlink (DL) transmission. U refers to an uplink slot and indicates that all OFDM symbols in the corresponding slot are configured to uplink (UL) transmission. S refers to a special slot and indicates that corresponding slot includes flexible symbols for DL/UL swithcing. Generally, the corresponding special slot in the case of a normal CP may include a total of 14 symbols, i.e., 12 DL symbols and 2 flexible symbols. Alternatively, the special slot may include 10 DL symbols, 2 flexible symbols, and 2 UL symbols. In other words, each symbol in a TDD carrier is configured or indicated as only one of DL, UL, or flexible symbols.

However, as shown in FIGS. 8A and 8B, when the UL subband is configured in any DL slot, DL and UL transmissions may occur simultaneously over different frequency resource within the same symbol. In this way, the DL slot or symbol including the UL subband, or the UL slot or symbol including the DL subband will be referred to as an SBFD slot or SBFD symbol in this specification.

Further, in this specification, a slot including only the SBFD symbols will be referred to as the SBFD slot, and a slot including only the symbols based on the existing symbol configuration (i.e., a slot including only symbols that do not include a UL subband, DL subband, and the guard band) will be referred to as a non-SBFD slot. Alternatively, a slot including at least one SBFD symbol may also be referred to as an SBFD slot.

Meanwhile, an idle/inactive UE in the current NR performs a random access procedure for the purpose of initial access. Information for this may be received through the "RACH-ConfigCommon information element (IE)" of the system information block 1 (SIB1). A cell that supports 2-step RACH includes "RACH-ConfigCommonTwoStepRA IE" to allow the UEs to perform the initial access through the 2-step RA procedure. The IE may refer to the standard specification TS 38.331.

If the base station supports subband based non-overlapping full duplex, it is considered to configure additional PRACH resources beyond the PRACH resources of the non-SBFD slot or symbol to transmit the PRACH preamble through the corresponding UL subband within the SBFD symbol or SBFD slot where the UL subband is configured as described above. This may not only increase the RACH resources of the UE but also help mitigate RACH delay issues that may arise in TDD configurations. However, the SBFD area is defined to utilize part of the typical DL resources, and thus DL interference may occur in the SBFD slot/symbol if the preamble transmission power is configured at the same level as that of the non-SBFD slot/symbol when the UE transmits the PRACH preamble in the subband of the same slot/symbol. In consideration of this issue, the transmission power for the RACH preamble transmitted in the SBFD slot/symbol may be configured differently from the transmission power for the RACH preamble configured in the non-SBFD slot/symbol.

However, when an SBFD-aware UE determines the PRACH transmission power for PRACH transmission over an SBFD symbol, the determined transmission power may be undesirably high due to increased path loss or accumulated power ramping from multiple PRACH failure. In this case, if consecutive PRACH transmission failures occur despite continuous PRACH transmission attempts, it may be considered that the failures are caused by interference between the DL and UL subbands, or due to relatively insufficient power compared to that used for non-SBFD symbols transmissions. The UE's continuous PRACH transmission failures may eventually lead to a radio link failure (RLF), resulting in degradation of overall system performance.

Currently, whether an SBFD (subband full-duplex)-aware UE is allowed to attempt RACH on ROs belonging to non-SBFD symbols is still under discussion (e.g., remains for further study FFS). However, a solution is needed to address the aforementioned issues, and even for SBFD-aware UEs, there is a need to define a mechanism that allows the UE to select PRACH resources from non-SBFD symbols under certain conditions.

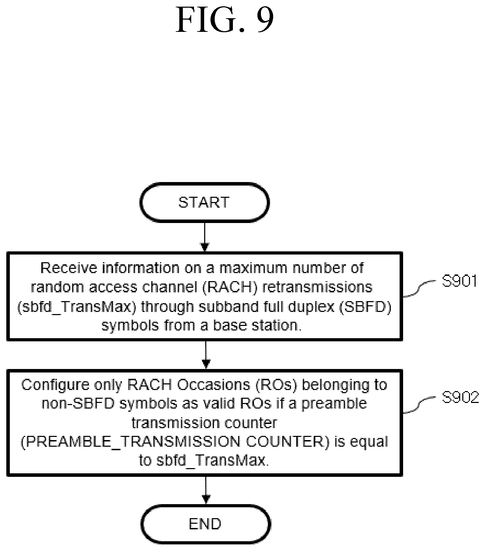

**FIG. 9** **is a flowchart showing a method of operating a terminal according to an embodiment.**

An embodiment of the present disclosure proposes a scheme for determining that, when a RACH procedure is triggered for an SBFD-aware UE and both RACH occasions (ROs) belonging to SBFD symbols and non-SBFD symbols are present, the UE performs only non-SBFD-based RACH if the SBFD-based RACH has failed N or more times. Specifically, if the SBFD-aware UE performs N RACH attempts - whether consecutive or not -- using ROs associated with SBFD symbols, the (N+1)th RACH attempt be restricted to selecting ROs only from non-SBFD symbols. The maximum number of RACH retries using ROs belonging to SBFD symbols (sbfd-TransMax) may be configured by the base station.

An SBFD-aware UE receives SBFD configuration information and associated PRACH configuration information, and based on the received configuration information, ROs belonging to SBFD symbols may be additionally configured in addition to legacy ROs (e.g., non-SBFD ROs).

Referring to FIG. 9, the UE receives information from the base station on a maximum number of RACH (Random Access Channel) retransmissions (sbfd_TransMax) through subband full duplex (SBFD) symbols (S901). Subsequently, if a preamble transmission counter (PREAMBLE_TRANSMISSION COUNTER) is equal to sbfd_TransMax, the UE restricts valid RACH occasions (ROs) to those belonging only to non-SBFD symbols (S902).

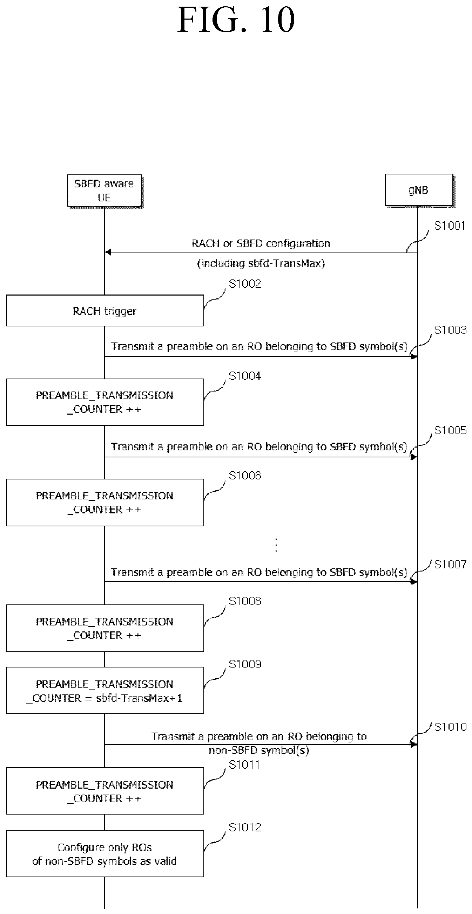

**FIG. 10** **illustrates a procedure between a terminal and a base station according to an embodiment of the disclosure.**

The first scheme proposed in the present disclosure is described below.

The present invention proposes that a terminal receives SBFD-related configuration information or a PRACH configuration message, which includes sbfd-TransMax, from a base station. When an SBFD-aware UE receives sbfd-TransMax from the base station and ROs belonging to SBFD symbols are additionally configured, the UE checks whether the PREAMBLE_TRANSMISSION_COUNTER is equal to (or greater than) sbfd-TransMax+1 whenever it performs a RACH procedure based on SBFD symbols. If the PREAMBLE_TRANSMISSION_COUNTER is equal to sbfd-TransMax+1, the SBFD-aware UE restricts RACH resource selection to ROs associated only with non-SBFD symbols.

When comparing the PREAMBLETRANSMISSION _COUNTER with sbfd-TransMax, it may be assumed that the SBFD-aware UE prioritizes selecting ROs belonging to SBFD symbols if such ROs are configured in addition to legacy ROs. That is, in the case where the UE is configured to select only ROs belonging to SBFD symbols during RACH initialization, and sbfd-TransMax consecutive RACH procedures have been performed through SBFD symbols without successful completion, the next RACH attempt by the UE is limited to ROs associated with non-SBFD symbols.

Below, the terminal operation is described in detail with reference to FIG. 10.

The terminal receives SBFD configuration information from the base station. The terminal also receives RACH-related configuration information, which includes the maximum number of RACH attempts (sbfd-TransMax) using ROs belonging to SBFD symbols (S1001).

Subsequently, when the RACH is triggered (S1002) and ROs belonging to SBFD symbols are additionally configured, the terminal initially configures the RA resources to include ROs associated with SBFD symbols.

The terminal transmits a preamble on an RO belonging to SBFD symbols (S1003, S1005, S1007) and increments the PREAMBLE_TRANSMISSION_COUNTER by 1 (S1004, S1006, S1008).

If the PREAMBLE_TRANSMISSION _COUNTER is equal to sbfd-TransMax+1 (S1009), the terminal sets the RA (Random Access) resource type to include only ROs belonging to non-SBFD symbols (e.g., reconfigures the RACH resource type to restrict valid Ros to those associated with non-SBFD symbols only), and based on the related configuration, retransmits the preamble, that is, retries the RACH procedure on an RO belonging to non-SBFD symbols (S1010). The terminal then increments the PREAMBLE_TRANSMISSION_COUNTER by 1 (S1011) and configures only ROs belonging to non-SBFD symbols as valid (S1012) (e.g., continues to treat only non-SBFD0-symbol Ros as valid resources). If the PREAMBLE_TRANSMISSION_COUNTER is less than sbfd-TransMax+1, the terminal retries the RACH procedure by performing the RA resource selection procedure for ROs belonging to SBFD symbols.

The following describes the operation of the base station with reference to FIG. 10.

The base station transmits SBFD-related configuration information to the terminal. The base station also transmits RACH-related configuration information, which includes the maximum number of RACH attempts (sbfd-TransMax) using ROs belonging to SBFD symbols, to the terminal (S1001).

Subsequently, the base station receives a preamble transmitted by the terminal on an RO belonging to either SBFD symbols or non-SBFD symbols (S1003, S1005, S1007, S1010).

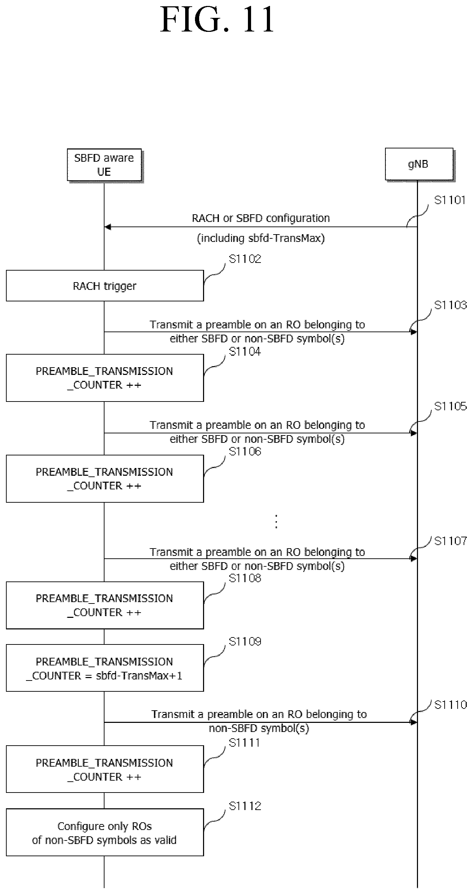

**FIG. 11** **illustrates a procedure between a terminal and a base station according to another embodiment of the disclosure.**

The second scheme proposed in the present disclosure is described below.

If an SBFD-aware UE is configured with both ROs belonging to non-SBFD symbols and ROs belonging to SBFD symbols, and is allowed to select the RO that appears earlier during the RACH resource selection process (i.e., if both non-SBFD and SBFD ROs are considered valid), the SBFD-aware UE may not consistently select only ROs belonging to SBFD symbols. In such a case, the terminal may select the earliest-located RO among the ROs belonging to SBFD or non-SBFD symbols at the time of preamble transmission, and may select a different type of RACH resource (SBFD or non-SBFD) for each preamble retransmission. Even for such a terminal capable of switching between SBFD and non-SBFD ROs during RACH retransmissions, if the PREAMBLE_TRANSMISSION_COUNTER reaches sbfd-TransMax+1, the terminal, despite being SBFD-aware, restricts RACH resource selection to ROs belonging only to non-SBFD symbols.

Below, the terminal operation is described in detail with reference to FIG. 11.

The terminal receives SBFD configuration information from the base station. The terminal also receives RACH-related configuration information, which includes the maximum number of RACH attempts (sbfd-TransMax) using ROs belonging to SBFD symbols (S1101).

Subsequently, when RACH is triggered (S1102) and ROs belonging to SBFD symbols are additionally configured, the terminal configures the RA resources to include both SBFD-symbol ROs and non-SBFD symbol ROs.

The terminal transmits a preamble on an RO belonging to either SBFD symbols or non-SBFD symbols (S1103, S1105, S1107), and increments the PREAMBLE_TRANSMISSION _COUNTER by 1 (S1104, S1106, S1108).

If the PREAMBLE_TRANSMISSION _COUNTER is equal to sbfd-TransMax+1 (S1109), the terminal sets the RA (Random Access) resource type to only ROs belonging to non-SBFD symbols (e.g., the terminal reconfigures the RA resources to include only non-SBFD-symbol ROs) and, based on the related configuration information, reattempts the RACH procedure by retransmitting the preamble on an RO belonging to non-SBFD symbols (S1110). Then, the terminal increments the PREAMBLE_TRANSMISSION_COUNTER by 1 (S1111) and sets only non-SBFD symbol ROs as valid (S1112). If the PREAMBLE_TRANSMISSION_COUNTER is less than sbfd-TransMax+1, the terminal sets the RA resource type to include both ROs belonging to SBFD symbols and ROs belonging to non-SBFD symbols, and reattempts the RACH procedure by performing the RA resource selection procedure.

The following describes the operation of the base station with reference to FIG. 11.

The base station transmits SBFD-related configuration information to the terminal. The base station also transmits RACH-related configuration information, which includes the maximum number of RACH attempts (sbfd-TransMax) using ROs belonging to SBFD symbols, to the terminal (S1101).

Subsequently, the base station receives a preamble transmitted by the terminal on an RO belonging to either SBFD symbols or non-SBFD symbols (S1103, S1105, S1107, S1110).

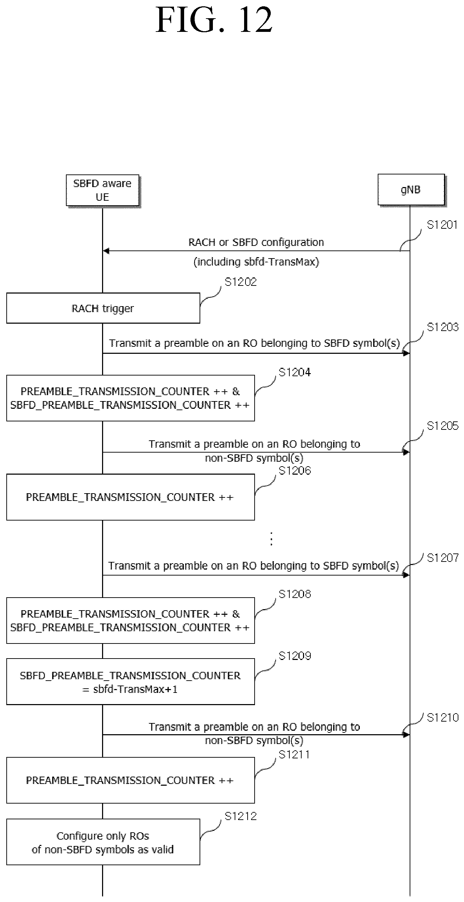

**FIG. 12** **illustrates a procedure between a terminal and a base station according to yet another embodiment of the disclosure.**

The third scheme proposed in the present disclosure is described below.

If an SBFD-aware UE is configured with both ROs belonging to non-SBFD symbols and ROs belonging to SBFD symbols, and is allowed to select the RO that appears earlier in the RACH resource selection process (i.e., both ROs belonging to non-SBFD symbols and ROs belonging to SBFD symbols are considered valid), the SBFD-aware UE may not consistently select ROs from SBFD symbols only. In this case, the UE can select the earlier-located RO among those belonging to SBFD or non-SBFD symbols at the time of preamble transmission, and may select a different type of RACH resource (SBFD or non-SBFD) for each retransmission attempt. For a UE capable of alternating between SBFD and non-SBFD symbol-based ROs in this manner and configured with sbfd-TransMax, the SBFD-aware UE increases not only the PREAMBLE_TRANSMISSION_COUNTER each time it selects an RO belonging to SBFD symbols but also separately increments an additional counter, SBFD_PREAMBLE_TRANSMISSION_COUNTER, by 1. That is, the PREAMBLE_TRANSMISSION_COUNTER is incremented by 1 regardless of whether the preamble is transmitted on an RO belonging to SBFD or non-SBFD symbols, while the SBFD_PREAMBLE_TRANSMISSION_COUNTER is incremented only when the preamble is transmitted on an RO belonging to SBFD symbols.

Below, the terminal operation is described in detail with reference to FIG. 12.

The terminal receives SBFD configuration information from the base station. The terminal also receives RACH-related configuration information, which includes the maximum number of RACH attempts (sbfd-TransMax) associated with ROs on SBFD symbols (S1201).

Subsequently, when RACH is triggered (S1202) and ROs belonging to SBFD symbols are additionally configured, the terminal configures both SBFD-symbol and non-SBFD-symbol ROs as RA resource types. Then, the UE initializes a new parameter, SBFD_PREAMBLE_TRANSMISSION_COUNTER, to 0.

The terminal transmits a preamble on an RO belonging to either SBFD symbols or non-SBFD symbols (S1203, S1205, S1207), and increments the PREAMBLE_TRANSMISSION_COUNTER by 1 (S1204, S1206, S1208). If a preamble is transmitted on an RO belonging to SBFD symbols, the terminal additionally increments the SBFD_PREAMBLE_TRANSMISSION_COUNTER by 1 (S1204, S1208).

If the PREAMBLE_TRANSMISSION_COUNTER is equal to sbfd-TransMax+1 (S1209), the terminal reconfigures the RA (Random Access) resource type to include only non-SBFD symbols ROs and, based on the related configuration information, reattempts the RACH procedure by retransmitting the preamble on an RO belonging to non-SBFD symbols (S1210). Then, the terminal increments the PREAMBLE_TRANSMISSION_COUNTER by 1 (S1211) and continues treating only ROs associated with non-SBFD symbols as valid (S1212). If the SBFD_PREAMBLE_TRANSMISSION_COUNTER is less than sbfd-TransMax + 1, the UE configures both SBFD and non-SBFD symbol-based ROs as RA resource types, and then performs an RA resource selection procedure to retry the RACH procedure.

The following describes the operation of the base station with reference to FIG. 12.

The base station transmits SBFD-related configuration information to the terminal. The base station also transmits RACH-related configuration information, which includes the maximum number of RACH attempts (sbfd-TransMax) associated with SBFD symbol ROs, to the terminal (S1201).

Subsequently, the base station receives a preamble transmitted by the terminal on an RO belonging to either SBFD symbols or non-SBFD symbols (S1203, S1205, S1207, S1210).

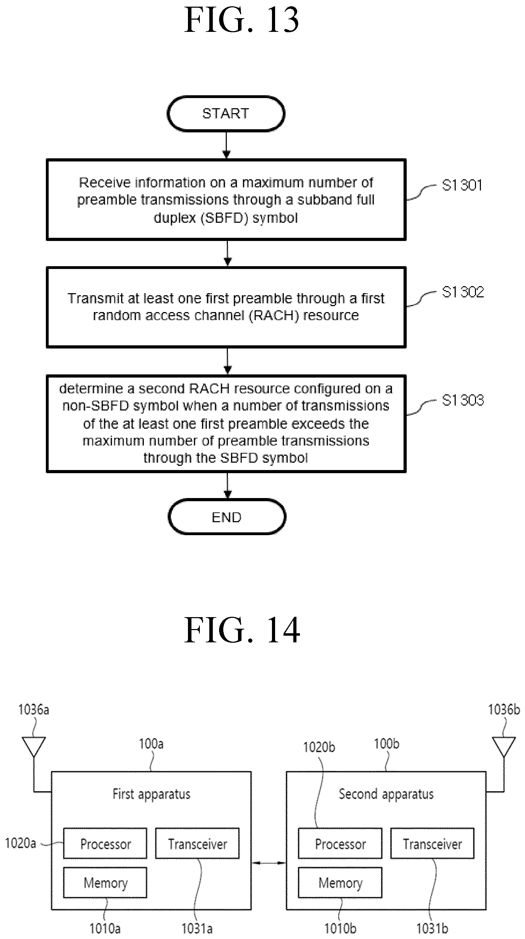

**FIG. 13** **is a flowchart showing a method of operating a terminal according to another embodiment.**

Referring to FIG. 13, the terminal receives information on a maximum number of preamble transmissions through a subband full duplex (SBFD) symbol from the base station (S1301). The terminal transmits at least one first preamble to the base station through a first random access channel (RACH) resource (S1302). If the number of transmissions of the first preamble exceeds the maximum number of preamble transmissions through the SBFD symbol, the terminal determines a second RACH resource configured on a non-SBFD symbol (S1303).

The terminal may transmit a second preamble through the determined second RACH resource.

The first RACH resource may be configured on the SBFD symbol. Additionally, the first RACH resource may be selected during the RACH initialization phase as a resource type associated with SBFD symbols.

In addition, when a resource type is switched from the first RACH resource to the second RACH resource and the second preamble is transmitted, further switching of resource type may be restricted.

The first RACH resource may correspond to resource types configured on both SBFD and non-SBFD symbols.

The first RACH resource may correspond to a first RACH occasion belonging to the SBFD symbol, and the second RACH resource may correspond to a second RACH occasion belonging to the non-SBFD symbol.

The embodiments described so far may be implemented through various means. For example, the embodiments may be implemented by hardware, firmware, software, or a combination thereof. Specifically, the implementation will be described below with reference to the accompanying drawings.

**FIG. 14** **is a block diagram showing apparatuses according to an embodiment of the disclosure.**

Referring to FIG. 14, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

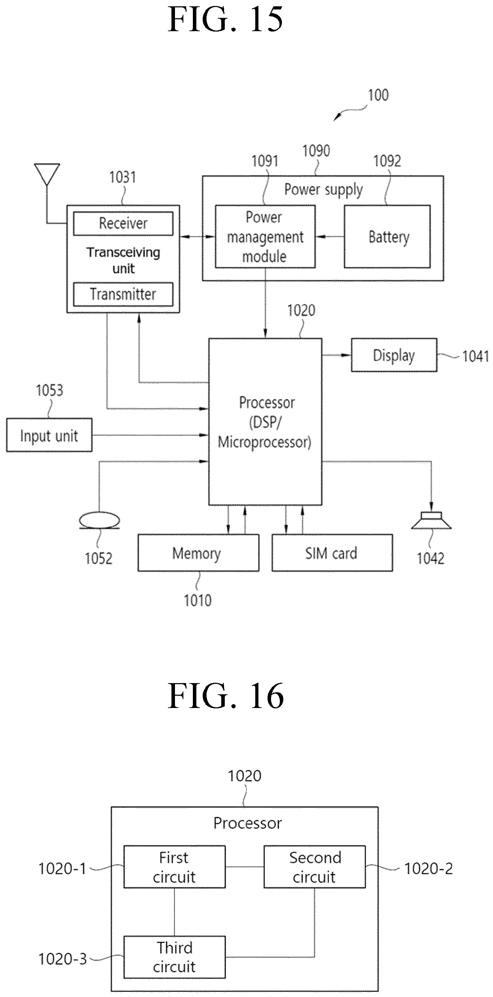

**FIG. 15** **is a block diagram showing a terminal (e.g., user equipment: UE) according to an embodiment of the disclosure.**

In particular, FIG. 15 illustrates the previously described apparatus of FIG. 14 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 16** **is a block diagram of a processor in accordance with an embodiment.**

Referring to FIG. 16, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

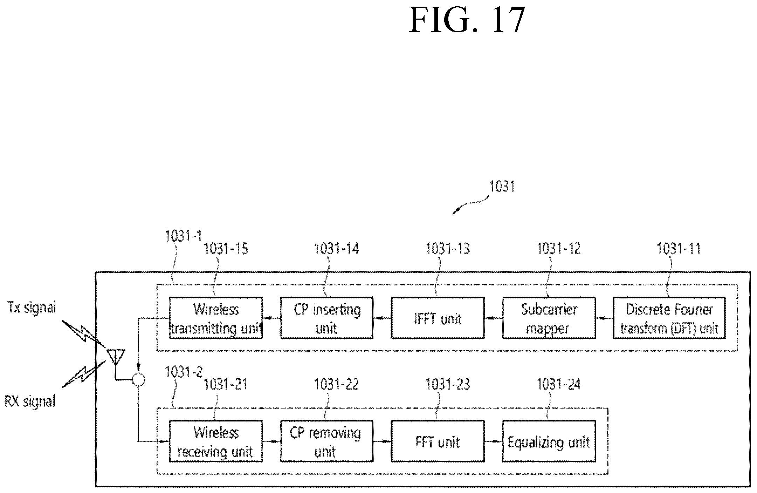

**FIG. 17** **is a detailed block diagram of a transceiver of a first apparatus shown in** **FIG. 14** **or a transceiving unit of an apparatus shown in** **FIG. 15****.**

Referring to FIG. 17, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, when a subband full duplex (SBFD)-aware terminal performs a random access (RACH) procedure using RACH occasions (ROs) belonging not only to non-SBFD symbols but also to SBFD symbols, the terminal transmits a preamble on an RO associated with non-SBFD symbols after repeated preamble transmissions on SBFD-symbol ROs fail. This allows prevention of continuous RACH transmission failures, reduces delays that may occur in the RACH procedure, and helps avoid radio link failure of the terminal.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
receiving information on a maximum number of preamble transmissions through a subband full duplex (SBFD) symbol;
transmitting at least one first preamble through a first random access channel (RACH) resource; and
determining a second RACH resource configured on a non-SBFD symbol when a number of transmissions of the at least one first preamble exceeds the maximum number of preamble transmissions through the SBFD symbol.

2. The method of claim 1, further comprising:
transmitting a second preamble through the determined second RACH resource.

3. The method of claim 2, wherein the first RACH resource is configured on the SBFD symbol.

4. The method of claim 3, wherein the first RACH resource corresponds to a resource type selected during a RACH initialization phase.

5. The method of claim 3, wherein, when a resource type is switched from the first RACH resource to the second RACH resource and the second preamble is transmitted, the resource type is fixed after the switch.

6. The method of claim 1, wherein the first RACH resource corresponds to resource types configured on both the SBFD symbol and the non-SBFD symbol.

7. The method of claim 1, wherein the first RACH resource corresponds to a first RACH occasion on the SBFD symbol, and the second RACH resource corresponds to a second RACH occasion on the non-SBFD symbol.

8. A terminal in a wireless communication system comprising:
at least one processor; and
at least one memory configured to store instructions and operably electrically connectable to the at least one processor,
wherein operations performed based on the instructions executed by the at least one processor comprise:
receiving information on a maximum number of preamble transmissions through a subband full duplex (SBFD) symbol;
transmitting at least one first preamble through a first random access channel (RACH) resource; and
determining a second RACH resource configured on a non-SBFD symbol when a number of transmissions of the at least one first preamble exceeds the maximum number of preamble transmissions through the SBFD symbol.

9. The terminal of claim 8, wherein operations performed based on the instructions executed by the at least one processor comprise:
transmitting a second preamble through the determined second RACH resource.

10. The terminal of claim 9, wherein the first RACH resource is configured on the SBFD symbol.

11. The terminal of claim 10, wherein the first RACH resource corresponds to a resource type selected during a RACH initialization phase.

12. The terminal of claim 10, wherein, when a resource type is switched from the first RACH resource to the second RACH resource and the second preamble is transmitted, the resource type switching is fixed after the switch.

13. The terminal of claim 8, wherein the first RACH resource corresponds to resource types configured on both the SBFD symbol and the non-SBFD symbol.

14. The terminal of claim 8, wherein the first RACH resource corresponds to a first RACH occasion on the SBFD symbol, and the second RACH resource corresponds to a second RACH occasion on the non-SBFD symbol.
